# EUROPEAN PATENT SPECIFICATION

(11) **EP 3 130 758 B1**
(45) Date of publication and mention of the grant of the patent: **12.12.2018**
(21) Application number: 14889098.1
(22) Date of filing: 07.10.2014
(51) Int. Cl.: F01D 9/02, F01D 25/00, F02C 7/00, F04D 29/54, F01D 5/28

(54) **COMPOSITE VANE**
VERBUNDLEITSCHAUFEL
AUBE STATORIQUE EN COMPOSITE

(30) Priority: 07.04.2014 JP 2014078562
(43) Date of publication of application: 15.02.2017
(73) Proprietor: IHI Corporation, Tokyo 135-8710 (JP)
(72) Inventor: OBUCHI, Kenro, Tokyo 135-8710 (JP); YAGI, Hiroyuki, Tokyo 135-8710 (JP)
(74) Representative: MERH-IP Matias Erny Reichl Hoffmann Patentanwälte PartG mbB
(86) International application number: PCT/JP2014/076819
(87) International publication number: WO 2015/155905

(56) References cited:
- EP-A2- 2 586 972
- WO-A1-2012/008452
- WO-A1-2013/178963
- JP-A- 2003 278 502
- JP-A- 2013 527 359
- US-A- 4 728 262
- US-A1- 2012 301 292
- US-A1- 2014 030 105

## Description

### Technical Field

The present invention relates to a composite vane which is used as a stator vane that composes a turbofan engine, for example.

### Background Art

A turbofan engine as described above is conventionally equipped with rotor blades that introduce air into an engine body, and guide vanes that are stator vanes straightening a flow of the air which is introduced by the rotor blades.

In order to meet requirements for increasing bypass ratio with an objective of improving fuel efficiency of a turbofan engine of recent years, fan diameter is tend to be enlarged. Accordingly, it becomes urgent to reduce the weight of the turbofan engine.

As the guide vane which is a stator vane straightening the flow of air, there is a guide vane which reduces its weight by being formed as a composite vane consisting of a composite material of a thermosetting resin such as an epoxy resin and reinforcing fibers such as carbon fibers, for example. In the case of the guide vane consisting of a composite material like this, the wear resistance is lower as compared with a metallic guide vane. Therefore, abrasion is avoided by bonding a metal sheath for preventing erosion to a leading edge section (a leading edge and a vicinity of the leading edge) which is especially easily worn, by an epoxy film adhesive (a hard adhesive) (refer to Patent Document 1, for example).

US 2014/030105 A1 describes a turbine engine blade which is made of composite material. The turbine engine blade includes on the one hand a leading edge and a trailing edge opposite to the leading edge, and on the other hand a structural reinforcement with a base and two fins. The structural reinforcement and lateral walls of the airfoil are shaped to maintain an assembly space with nonzero thickness between at least one of the fin and the airfoil when the structural reinforcement is in place on the airfoil.

WO 2013//178963 describes a method of producing a metal reinforcement which is intended to be mounted on a leading edge or trailing edge of a composite blade of a turbine engine.

### Related Art Document

### Patent Document

Patent Document 1: Japanese Patent Laid-Open No. 2001-041002

### Summary of the Invention

### Problems to be solved by the Invention

In the case of the above-described guide vane, a composite vane body formed from a composite material is manufactured by going through molding, excessive thickness part removal by machining, and leading edge round finish that finishes a leading edge into a curved shape. Since leading edge round finish is mainly performed by handwork, there is a problem that the leading edge round finish takes much time and effort, and to solve this problem has been a challenge in the prior art.

The present invention has been made in view of the above-described conventional problem, and an object of the present invention is to provide a composite vane that takes a short manufacturing time at low manufacturing cost and a method for manufacturing the composite vane.

### Means for Solving the Problems

A first aspect of the present invention is a composite vane as defined in claim 1 and including a composite vane body that is formed from a composite material of a thermosetting resin or a thermoplastic resin and reinforced fibers, which is obtained by molding, and a metal sheath that is bonded to a leading edge section including a leading edge of the composite vane body and a vicinity of the leading edge via a film adhesive formed by impregnating a mesh with a hard adhesive to cover the leading edge section, wherein an underfill section that is formed in a step of removing an excessive thickness part remaining on the leading edge after the molding and does not need leading edge round finish is placed on the leading edge of the leading edge section in the composite vane body.

In the present invention, after the composite vane body formed from the composite material of a thermosetting resin or a thermoplastic resin and reinforced fibers is manufactured by molding, the excessive thickness part remaining on the leading edge of the leading edge section in the composite vane body is removed by machining.

When the underfill section which does not need leading edge round finish is formed on the leading edge in the step of removing the excessive thickness part, leading edge round finish by handwork does not have to be performed by an amount of the underfill section, and therefore, as compared with the case of performing leading edge round finish by handwork for an entire span of the composite vane body, reduction of manufacturing time and manufacturing cost are realized.

### Advantageous Effects of the Invention

With the composite vane according to the present invention, an excellent effect of being able to realize reduction of manufacturing time and manufacturing cost is brought about.

### Brief Description of the Drawings

FIG. 1 is a schematic sectional explanatory view of a turbofan engine adopting a composite vane according to one embodiment of the present invention as a guide vane.
FIG. 2 is an enlarged perspective explanatory view in an end part of the guide vane in FIG. 1.
FIG. 3A is a partial sectional explanatory view at a position along line A-A in FIG. 2.
FIG. 3B is a partial sectional explanatory view at a position along line B-B in FIG. 2.
FIG. 4A is a partial sectional explanatory view showing a machining removal amount and a handwork removal amount of an excessive thickness part in the position along line A-A in FIG. 2.
FIG. 4B is a partial sectional explanatory view showing a machining removal amount of an excessive thickness part in the position along line B-B in FIG. 2.

### Mode for Carrying out the Invention

Hereinafter, the present invention will be described on the basis of the drawings.

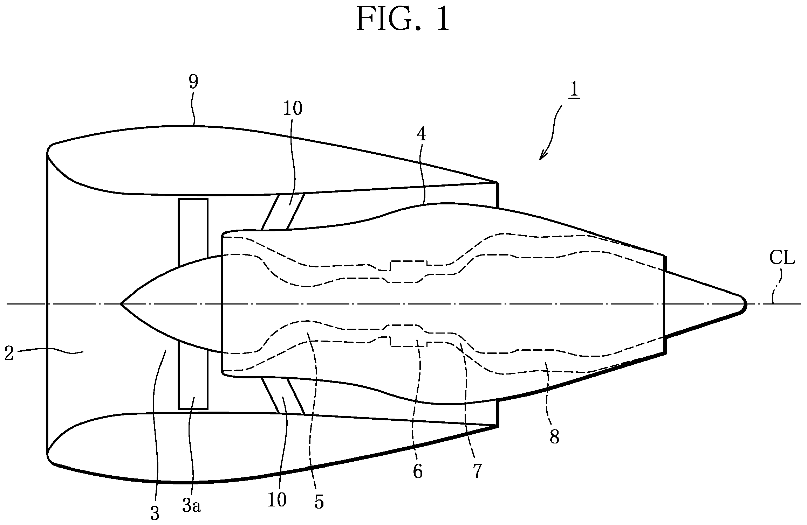

FIG. 1 to FIG. 4B show one embodiment of a composite vane according to the present invention, and in the embodiment, a case where the composite vane according to the present invention is a guide vane as a stator vane composing a turbofan engine will be described by being cited as an example.

As shown in FIG. 1, a turbofan engine 1 feeds air that is taken in from an air intake port 2 at a front side (a left side in the drawing) to a compressor 5 in an engine internal cylinder 4 with a fan 3 having a plurality of fan blades 3a, injects fuel to the air that is compressed by the compressor 5 to cause the fuel to combust in a combustion chamber 6, and rotates a high-pressure turbine 7 and a low-pressure turbine 8 around an axis CL by expansion of high-temperature gas generated by the combustion.

In the turbofan engine 1, guide vanes 10 as a plurality of stator vanes are placed in a bypass channel between an inner peripheral of a nacelle 9 that covers the plurality of fan blades 3a of the fan 3 and an outer periphery of the engine internal cylinder 4, and the guide vanes 10 are placed equidistantly around the engine internal cylinder 4 to straighten a swirling air flow that flows through the bypass channel.

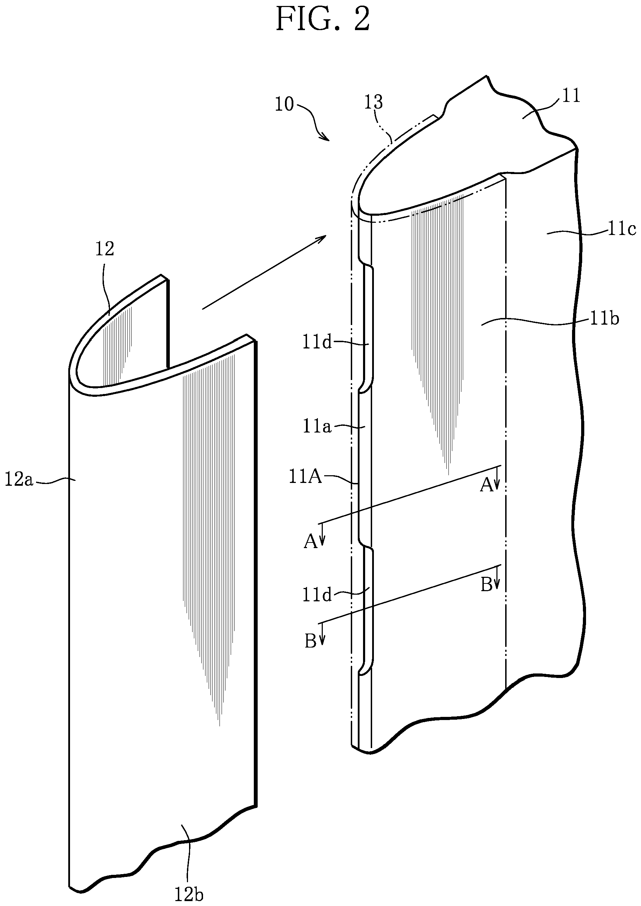

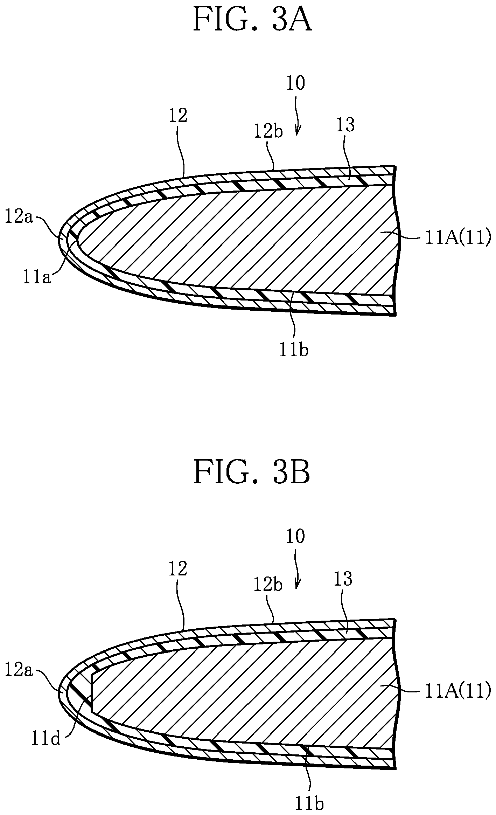

As shown in FIG. 2 and FIG. 3A, the guide vane 10 includes a composite vane body 11 formed from a composite material, and a metal sheath 12 covering a leading edge section 11A including a leading edge 11a and a vane surface in the vicinity of the leading edge 11a (a vicinity of the leading edge) 11b of the composite vane body 11.

The composite vane body 11 is obtained by molding using a composite material of a thermosetting resin such as an epoxy resin, a phenol resin, or a polyimide resin, or a thermoplastic resin such as a polyether imide, a polyether ether ketone, or a polyphenylene sulfide, and reinforcing fibers such as carbon fibers, aramid fibers or glass fibers as a composing material.

The metal sheath 12 is formed from a thin plate with a thickness of approximately 0.2 mm made of a titanium alloy or a stainless steel, and has a curved section 12a and a planar section 12b that respectively correspond to the leading edge 11a and the vane surface 11b in the leading edge section 11A of the composite vane body 11. The metal sheath 12 is bonded to the leading edge section 11A of the composite vane body 11 by a film adhesive 13 with a thickness of approximately 0.2 mm which is formed by impregnating a mesh with a hard adhesive, for example, an epoxy adhesive that is solidified to be hard, and the leading edge section 11A of the composite vane body 11 is formed to be thinner than a vane center 11c of the composite vane body 11 by thicknesses of the metal sheath 12 and the film adhesive 13.

In this case, as is also shown in FIG. 3B, an underfill section 11d is placed on the leading edge 11a of the leading edge section 11A in the composite vane body 11.

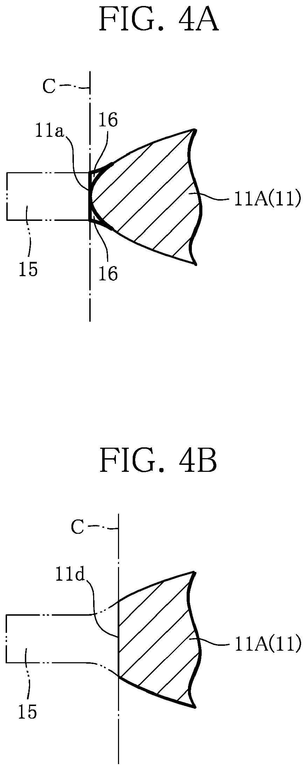

Here, as for an excessive thickness part remaining on the leading edge 11a of the composite vane body 11 after molding, a handwork removal excessive thickness part 16 is removed by handwork as leading edge round finish, subsequently to removal of a machining removal excessive thickness part 15 at a cut line C by machining, as shown in FIG. 4.

Meanwhile, the underfill section 11d is formed simultaneously with the above-described machining or only by machining following the above-described machining. That is, the underfill section 11d is formed by removing the excessive thickness part remaining on the leading edge 11a including a part of the leading edge 11a and the above-described handwork removal excessive thickness part 16 at the cut line C, as the machining removal excessive thickness part 15, as shown in FIG. 4B. Accordingly, in the underfill section 11d, leading edge round finish by handwork is not needed.

The underfill sections 11d are placed at a plurality of positions in a vane span direction of the leading edge 11a, and each functions as an adhesive gathering spot for the hard adhesive in the film adhesive 13.

A length in the vane span direction of the underfill section 11d that does not need leading edge round finish is set as 50 to 150 mm, and a length in a vane chord direction is set at 5 % or less of a vane chord width. Further, when the underfill sections 11d are placed at a plurality of positions in the vane width direction of the leading edge 11a as described above, a space from one another, that is, a length of a portion needing leading edge round finish is set at 5 to 10 mm.

When the composite vane body 11 is manufactured in a manufacturing process of the guide vane 10 described above, the composite vane body 11 formed from a composite material of a thermosetting resin or a thermoplastic resin and reinforcing fibers is obtained by molding first, after which, the machining removal excessive thickness part 15 of the excessive thickness part remaining on the leading edge 11a of the composite vane body 11 is removed at the cut line C by machining, and subsequently, the handwork removal excessive thickness part 16 is removed by handwork as leading edge round finish, as shown in FIG. 4A.

In a step of removing the excessive thickness part, the underfill sections 11d are formed by removing the excessive thickness part remaining on the leading edge 11a including a part of the leading edge 11a and the above-described handwork removal thickness part 16 at the cut line C as the machining removal excessive thickness part 15, as shown in FIG. 4B.

When the underfill sections 11d are formed on the leading edge 11a in the step of removing the excessive thickness part in this way, leading edge round finish by handwork does not have to be performed for the underfill sections 11d, and therefore, as compared with a case where leading edge round finish by handwork is performed for the entire span of the composite vane body 11, reduction of manufacturing time and manufacturing cost are realized.

Further, since in the guide vane 10 according to the invention the underfill sections 11d which do not need leading edge round finish are placed at a plurality of positions in the vane width direction of the leading edge 11a, handwork in the leading edge round finish is further reduced, and reduction of manufacturing time and manufacturing cost are achieved correspondingly.

In the above-described embodiment, the case where the composite vane according to the present invention is the guide vane 10 as the stator vane composing the turbofan engine 1 is described by being cited as an example, but the present invention is not limited to this, and the present invention can be adopted not only as a fan blade of a turbofan engine, but also as a rotor blade and a tail rotor blade of a rotorcraft.

Configurations of the composite vane according to the present invention are not limited to the embodiment described above.

A first aspect of the present invention is a composite vane including a composite vane body that is formed from a composite material of a thermosetting resin or a thermoplastic resin and reinforced fibers, which is obtained by molding, and a metal sheath that is bonded to a leading edge section including a leading edge of the composite vane body and a vicinity of the leading edge via a film adhesive formed by impregnating a mesh with a hard adhesive to cover the leading edge section, wherein an underfill section that is formed in a step of removing an excessive thickness part remaining on the leading edge after the molding and does not need leading edge round finish is placed on the leading edge of the leading edge section in the composite vane body.

In the first aspect of the present invention, after the composite vane body formed from the composite material of a thermosetting resin or a thermoplastic resin and reinforced fibers is produced by molding, an excessive thickness part remaining on the leading edge of the leading edge section in the composite vane body is removed by machining.

When the underfill section which does not need leading edge round finish is formed on the leading edge in the step of removing the excessive thickness part, leading edge round finish by handwork does not have to be performed by the amount of the underfill section, and therefore, as compared with the case of performing leading edge round finish by handwork for the entire span of the composite vane body, reduction of manufacturing time and manufacturing cost are realized.

The underfill sections are placed at a plurality of positions in a vane span direction of the leading edge, and function as adhesive gathering spots for a hard adhesive in the film adhesive.

The underfill sections which do not need leading edge round finish are placed at a plurality of positions in the vane span direction of the leading edge, so that handwork in the leading edge R finish is further reduced, and reduction of manufacturing time and manufacturing cost are achieved correspondingly.

A third aspect of the present invention is such that at a time of manufacturing the composite vane according to the first aspect or the second aspect, the third aspect of the present invention forms an underfill section that does not need leading edge round finish on the leading edge, in a step of removing an excessive thickness part remaining on the leading edge of the leading edge section after molding of the composite vane body.

### Explanation of Reference Signs

- 10: Guide vane (composite vane)
- 11: Composite vane body
- 11A: Leading edge section
- 11a: Leading edge
- 11b: Vane surface (vicinity of leading edge)
- 11d: Underfill section
- 12: Metal sheath
- 13: Film adhesive
- 15: Machining removal excessive thickness part
- 16: Handwork removal excessive thickness part

## Claims

1. A composite vane (10), comprising:
a composite vane body (11) comprising a thermosetting resin or a thermoplastic resin and reinforcing fibers; and
a metal sheath (12) that is bonded to a leading edge section (11A) including a leading edge (11a) of the composite vane body (11) and a vicinity of the leading edge (11a) via a film adhesive (13) composed of a mesh impregnated with a hard adhesive to cover the leading edge section (11A),
**characterized in that**
the leading edge section (11A) has areas along a span of the composite vane body (11) with a rounded leading edge separated by areas where the leading edge is removed leaving behind a straight leading edge, these areas forming leading edge recesses (11d) in which the film adhesive accumulates.

## Patentansprüche

1. Verbundleitschaufel (10), die umfasst:
einen Verbundleitschaufelkörper (11), der ein wärmehärtendes Harz oder ein thermoplastisches Harz und Verstärkungsfasern umfasst; und
eine Metallummantelung (12), die über einen Folienklebstoff (13), der aus einem Gitter zusammengesetzt ist, das mit einem festen Klebstoff imprägniert ist, an einen Vorderkantenabschnitt (11A) gebondet ist, der eine Vorderkante (11a) des Verbundleitschaufelkörpers (11) und ein Umfeld der Vorderkante (11a) umfasst, um den Vorderkantenabschnitt (11A) zu bedecken,
**dadurch gekennzeichnet, dass**
der Vorderkantenabschnitt (11A) Bereiche entlang einer Erstreckung des Verbundleitschaufelkörpers (11) mit einer abgerundeten Vorderkante aufweist, die durch Bereiche getrennt sind, in denen die Vorderkante entfernt ist, wodurch eine gerade Vorderkante zurückbleibt, wobei diese Bereiche Vorderkantenausnehmungen (11d) bilden, in denen sich der Folienklebstoff ansammelt.

## Revendications

1. Aube statorique en composite (10), comprenant :
un corps d'aube statorique en composite (11) comprenant une résine thermodurcissable ou une résine thermoplastique et des fibres de renfort ; et
une gaine métallique (12) qui est liée à une section de bord d'attaque (11A), comprenant un bord d'attaque (11a) du corps d'aube statorique en composite (11) et un voisinage du bord d'attaque (11A), par l'intermédiaire d'un adhésif en film (13) composé d'une maille imprégnée d'un adhésif dur pour couvrir la section de bord d'attaque (11A),
**caractérisée par le fait que**
la section de bord d'attaque (11A) a des zones le long d'une étendue du corps d'aube statorique en composite (11) avec un bord d'attaque arrondi séparées par des zones où le bord d'attaque est retiré, laissant un bord d'attaque droit, ces zones formant des renfoncements de bord d'attaque (11d) dans lesquels l'adhésif en film s'accumule.
